(19) Europäisches Patentamt / European Patent Office / Office européen des brevets

(11) **EP 1 375 569 B1**

(12) **EUROPEAN PATENT SPECIFICATION**

(45) Date of publication and mention of the grant of the patent:
**10.10.2007 Bulletin 2007/41**

(51) Int Cl.:
*C08J 3/20* (2006.01)   *C08J 5/18* (2006.01)
*C09D 147/00* (2006.01)

(21) Application number: **02013587.7**

(22) Date of filing: **20.06.2002**

(54) **Radiation-curable mixtures comprising highly-branched polyesters having acrylate terminal groups**

Strahlungshärtbare Zusammensetzungen enthaltend hochverzweigte, Acrylat-Endgruppen aufweisende, Polyestere

Compositions durcissables par irradiation comprenant des polyesters hyperbranchés à groupes acrylates terminaux

(84) Designated Contracting States:
**DE**

(43) Date of publication of application:
**02.01.2004 Bulletin 2004/01**

(73) Proprietor: **DAINIPPON INK AND CHEMICALS, INC.**
**Itabashi-ku**
**Tokyo (JP)**

(72) Inventors:
• **Frings, Rainer B., Dr.**
  **D-13403 Berlin (DE)**
• **Grahe, Gerwald F., Dr.**
  **D-13403 Berlin (DE)**
• **Shibata, Ou**
  **Osaka, zip 559-0014 (JP)**

(74) Representative: **Albrecht, Thomas et al**
**Kraus & Weisert**
**Thomas-Wimmer-Ring 15**
**80539 München (DE)**

(56) References cited:
**WO-A-00/66669**    **WO-A-00/77070**
**US-A- 4 070 259**

**Description**

The invention relates to mixtures which contain highly-branched polyesters having acrylate terminal groups, which polyesters are produced in accordance with patent application EP 2002 0003299 and contain radical-forming UV initiators, and also, where required, other monomers, oligomers or polymers which are polymerisable by free radicals plus, where required, other generally known additives, and which cure, when exposed by suitable irradiating means, to form crosslinked films or layers, such as paints and printing inks for example. Due to their content of highly-branched polyesters having acrylate terminal groups, such crosslinked films or layers are endowed, amongst other things, with better adhesion to metal substrates such as aluminium, tinplate and steel and to many plastics materials such as polyester films for example than conventional UV acrylate layers largely composed of UV crosslinkable constituents of low molecular weight. They are also capable of considerably improving important mechanical properties of such films or layers such as their flexibility, toughness and impact resistance.

In contrast to the dendrimers, which have to be built up in stages from building blocks of lower molecular weight and whose principles of construction are described by Tomalia et al. in Angew. Chem. Int. Ed., 29, 138 (1990) and Frechet in Science, 263, 1719 (1994) and in J. Macromol. Sc., Pure Appl. Chem. A31 (11), 1627 (1994), highly-branched polymers are simpler to produce, preferably in single-stage or two-stage reactions, but in return the macromolecule does not have the same highly regular branched structure. However, because they are easier to produce in principle they are of greater interest to industry than dendrimers. The interest which there in dendrimers and highly-branched polymers is due to certain unique properties which these novel classes of polymers have. The viscosities of solutions and melts of such polymers for example are considerably lower than those of linear coiled polymers having similar structural elements and comparable molecular weights, the reason being that in a solution or melt the highly-branched macromolecules do not have a coiled configuration but are in a tightly packed ball-shaped or spherical form and thus have a substantially lower hydrodynamic radius than coiled molecules. In principle, it should therefore not be possible for any entanglement, which increases viscosity, to take place between chains of different molecules. This is true even of mixtures of highly-branched and linear polymers in solvents, where even small proportions of highly-branched polymers in the polymer mix are able appreciably to reduce the viscosity of the solution, as C. M. Nunoz et al were able to show in Macromolecules, 33, p. 1720-26 (2000).

Reactive groups are present in highly-branched polymers mainly at the outer ends of the branches of the chain and they are available there for further reactions. As the diameter of the macromolecule increases so too does the number of such groups.

Following for example the teaching given by A. Hult et al in Macromolecules 28, 1698 (1995) and WO 93/17060, the production of highly-branched polymers can be carried out by the polycondensation of a monomer having a group A and two identical groups B, a so-called $AB_2$ monomer. A suitable monomer which will be mentioned here is 2,2-dimethylol propionic acid. Under WO 93/17060, to achieve a high degree of branching, a polyfunctional alcohol such as trimethylol propane or pentaerythritol is condensed with this acid in a molar ratio of 1:3 respectively 1:4 and the hexafunctional or octafunctional polyol obtained is polycondensed with further 2,2-dimethylol propionic acid. The terminal groups of the condensation polymer obtained are predominantly OH groups.

Other methods are based on the polycondensation of a polyol with a cyclic anhydride, as described by Rånby and Shi in U.S. 5,834,118, or on that of a dialkanolamine with a cyclic anhydride, as claimed in NL 1008189.

For many applications, there is an interest in introducing reactive terminal groups other than OH or COOH groups. It appears desirable in this way for highly-branched polymers to be provided with unsaturated terminal groups, such as acrylate or methacrylate groups for example, to enable the properties of this class of polymers also to be exploited for the production of materials able to be polymerised and crosslinked by free radicals, such for example as UV-curable paints and printing inks, fibre-reinforced polyester mouldings, three-dimensional components produced by stereo-lithography, or high-impact polystyrene.

A number of highly-branched polymers having acrylate or methacrylate groups are already known, these being obtained by for example the reaction, described by M. Johansson et al in Journal of Applied Polymer Science 75, 612-618 (2000), of the highly-branched BOLTORN™ polyester with methacrylic acid anhydride, by the reaction, described by M. Johannson and A. Hult in Journal of Coatings Technology 67, No. 849, p. 35-39 (1995), of the BOLTORN™ polyesters mentioned with acrylic acid chloride or mixtures of acrylic acid chloride and propionic acid chloride or benzoic acid chloride and the reaction described by Shi and Rånby in WO 96/07688 of highly-branched polyesters composed of polyol and cyclic anhydrides with glycidyl methacrylate, by the reaction claimed in WO 00/59982 of highly-branched polyesters with glycidyl methacrylate or allylglycidyl ether and the esterification claimed in WO 00/77070 of highly-branched BOLTORN™ polyesters with acrylic acid. Examples can also be found in these documents of the radiation curing of the modified highly-branched polyesters and of the properties of the films and layers produced in this way.

What all these methods have in common is the retrospective introduction of the unsaturated terminal groups into highly-branched polyesters which have already been preformed, by a further reaction stage such as the reaction of OH groups with acrylic or methacrylic acid anhydride, direct esterification with acrylic or methacrylic acid or the reaction of terminal COOH groups with unsaturated glycidyl compounds.

However, our own investigations relating to the modification of OH terminated highly-branched polymers with acrylate and methacrylate terminal groups have shown that the desired reaction of OH and COOH terminal groups with suitable unsaturated reactants is difficult and, because it is incomplete, can lead to breakdown of the polymer or premature crosslinking.

It is also a disadvantage in many applications that, because of the small numbers of $AB_2$ or $A_2B_3$ monomers available as building blocks, the structures of the highly-branched polymers to be modified allow only a few possible variations. The highly-branched polyesters which have been described to date, some of which are commercially available, are solids in which the branches are spaced only short distances apart. Following partial or almost complete modification with unsaturated terminal groups, what are obtained are high-viscosity resins which, for many applications in radiation-curing systems, have to be diluted to the viscosity needed for the application with large amounts of low-viscosity reactive thinners. By following the teaching given in WO 00/77070, the reduction in the viscosity of the resin can also be achieved by simultaneous esterification of the highly-branched polyester polyol with mixtures of saturated long-chain carboxylic acids and acrylic acid, with the viscosities of the resin very much depending on the ratio between the carboxylic acid and the acrylic acid and on the content of free OH groups, as the data published in the application cited shows.

By contrast, in the method described in EP A 02003299 highly-branched polyesters having acrylate terminal groups are obtained in a single-stage reaction. By this method, polymers of this kind are produced from polyfunctional sorbic acid esters by a Diels-Alder reaction with polyfunctional acrylic acid esters whose functionality is at least one less than that of the sorbic acid esters used. The polyfunctional sorbic acid esters used may be tri-, tetra- or hexafunctional esters which can be obtained by methods known per se from the corresponding polyfunctional alcohols and sorbic acid or from their monofunctional esters. The polyfunctional acrylic acid esters which may be considered are all the di-, tri- and tetrafunctional esters, with the commercially available ones being particularly preferred. Hence the advantage of the products described in EP A 02003299 lies not only in the fact that they are produced in a single stage and also in the wide range of variation of the polymer structures which are possible, which allows the products to be tailored to suit the most diverse applications. This possibility does not exist with the highly-branched polyesters having acrylate or methacrylate terminal groups which have been described to date.

Highly-branched polymers having unsaturated terminal groups constitute valuable starting materials for systems crosslinkable by UV-generated free radicals, such as UV paints and printing inks, when used either alone or in combination with suitable mono-, di- and polyfunctional acrylates which are known per se for such purposes. The UV crosslinking takes place in the presence of photo-initiators which are known per se and, where required, of pigments and normal additives such as levelling agents, UV stabilisers and antifoaming agents. UV crosslinkable layers of this kind are for example described in WO 00/77070 and by B. Petterson in a paper given at the 6th Nuremberg Congress, European Coating Show 2001. The paper mentioned above also teaches the modification of highly-branched polyesters with acrylate terminal groups for photo-initiator-free UV crosslinking by sec. amines having extractable $\alpha$-H atoms.

Due to the large number of acrylate terminal groups, the highly-branched polymers usable for UV crosslinking can be expected to show a high crosslinking rate and, because of their higher molecular weights than industrially available di- to hexafunctional acrylates, less shrinkage after crosslinking and hence potentially better adhesion to substrates such as metals and plastics materials such as polyesters and polyolefins, to which the radiation-cured acrylate mixtures known to date do not adhere at all or adhere only poorly.

Highly-branched polyesters also have a lower viscosity that linear polyesters having similar structural elements and molecular weights, which means that they can be used as reactive thinners for high-viscosity epoxy acrylates and linear polyester acrylates. Examples showing the viscosity-reducing effect of highly-branched polyesters having acrylate terminal groups are given in WO 00/77070 and EP A 02003299.

Other obvious advantages of using highly-branched polyesters having acrylate terminal groups are the moderation of the typical acrylate smell of paints and crosslinked coatings, the reduction in the amount of unreacted volatile and extractable acrylates in the crosslinked films and the effect that there is on the chemical and mechanical properties of the coatings.

The present invention relates to the use of highly-branched polyester resins having acrylate terminal groups in accordance with EP A 02003299 either as sole components, as mixtures of at least two highly-branched polyester resins having acrylate terminal groups of different monomeric compositions as taught in EP A 02003299, or as components of a mixture with at least one other mono-, di- or polyfunctional acrylate suitable for the intended applications which is known per se, in the presence of one or more photo-initiators which are known per se and where required other normal additives for producing radiation-cured films in the form of paints or printing inks, particularly by crosslinking with UV or visible light or with electron beams.

The subject of the invention is a mixture for producing radiation-cured films or layers, comprising (a) a highly-branched polyester have acrylate terminal groups, obtainable by polymerising m-functional sorbic acid esters as a component A and n-functional acrylic acid esters as a component B in a Diels-Alder reaction at a temperature of from 50 to 150°C, where

(i) m and n are natural numbers from 2 to 6 and the difference between m and n is at least 1 and
(ii) the components A and B are used in a ratio between the number of moles which satisfies the following equation (1):

$$n_e/n_v \geq f_v - 1 \qquad (1)$$

where $n_e$ is the number of moles of the component of lower functionality, $n_v$ is the number of moles of the component of higher functionality and $f_v$ is the functionality of the component of higher functionality, and
(b) a photo-initiator.

As explained in detail in EP A 02003299, highly-branched polyesters having acrylate terminal groups can be produced in a single stage, without crosslinking, from polyfunctional sorbic acid esters and polyfunctional acrylates whose functionality must be at least one function lower that than of the sorbic acid esters, if the combination of branching sorbic acid esters (v) and of acrylates (e) supplying the acrylate terminal groups meets the following molar ratio requirements:

a.) trisorbate (v) + diacrylate (e); $n_e/n_v \geq 2$;
b.) tetrasorbate (v) + diacrylate (e); $n_e/n_v \geq 3$;
c.) tetrasorbate (v) + triacrylate (e); $n_e/n_v \geq 3$;
d.) hexasorbate (v) + diacrylate (e); $n_e/n_v \geq 5$;
e.) hexasorbate (v) + triacrylate (e); $n_e/n_v \geq 5$;
f.) hexasorbate (v) + tetraacrylate (e); $n_e/n_v \geq 5$.

The highly-branched polyesters having acrylate terminal groups which are produced from polyfunctional sorbic acid esters and polyfunctional acrylic acid esters by a Diels-Alder reaction, preferably in aqueous emulsion at 50 to 95°C, are liquid, low- to high-viscosity resins whose mean numerical molecular weight may be between 1,000 and 50,000 g/mol and which still contain residual amounts of polyfunctional acrylates which were not consumed in the Diels-Alder reaction, especially if the molar ratio $ne/n_v$ for the combinations a.) - f.) given in the above list is higher than the whole numbers quoted. To simplify the description of the highly-branched polyesters having acrylate terminal groups which are produced from combinations a.) - f.), they will be referred to in what follows as

a.) $S_3A_2$ acrylate polyester
b.) $S_4A_2$ " "
c.) $S_4A_3$ " "
d.) $S_6A_2$ " "
e.) $S_6A_3$ " "
f.) $S_6A_4$ " "

By combining a plurality of polyfunctional sorbic acid esters which can easily be produced by methods known per se with an at least equal plurality of polyfunctional acrylates which are known per se and also commercially available it is easily possible to produce widely differing highly-branched polyesters, having acrylate terminal groups, which differ from one another in their structural features, such as the functionality of the branch groups, the distance between the branch groups and the chemical structure of the segments between the branch groups, and in their acrylate group content and thus in their crosslinking reactivity and which can thus be adapted to meet the requirements of the different fields of application for radiation-curable systems.

Preferred for use in UV crosslinking systems, such as paints and printing inks, are highly-branched polyesters having acrylate terminal groups, whose molecular weights (numerical means) are between 1,000 and 50,000 g/mol, and with particular advantage between 2,000 and 10,000 g/mol, and which still contain 5 to 30 % of the polyfunctional acrylate which was used to produce them but did not completely react, and which are referred to below as highly-branched polyester resins. The viscosity of the liquid resins may be 0.5 to 100 Pas, and preferably 0.5 to 50 Pas, and as a particular preference 0.5 to 5 Pas. What are suitable are both $S_3A_2$ and $S_4A_2$ polyesters and also, with particular advantage, $S_4A_3$, $S_6A_2$, $S_6A_3$ and $S_6A_4$ polyesters.

Particularly suitable and preferred are highly-branched polyesters in accordance with EP A 02003299 which are obtainable, by a Diels-Alder reaction, preferably in aqueous solution at temperatures of between 90 and 95°C, of tri-, tetra- or hexasorbates of commercially available and where appropriate short-chain ethoxylated or propoxylated triols, teatrols and hexaols such for example as ethoxylated or propoxylated trimethylol propanes having an average of 0.5 to 10 ethylene oxide or propylene oxide groups per OH group, ethoxylated or propoxylated glycerines having an average of 0.5 to 10 ethylene oxide or propylene oxide groups per OH group, di-trimethylol propane, pentaerythritol and di-pentaerythritol and their ethoxylated and propoxylated derivatives having an average of 0.5 to 10 ethylene oxide or propylene oxide groups per OH group, with diacrylates of low molecular weight such for example as di- and tripropylene glycol diacrylate, polyethylene glycol diacrylates of polyethylene glycols having mean molecular weights of between 200 and 1,000 g/mol, butanediol-1,4-diacrylate and hexanediol-1,6-diacrylate, or, in the case of the $S_4A_3$ and $S_6A_3$ polyesters, with triacrylates such for example as the triacrylates of trimethylol propane and glycerine and ethoxylated and propoxylated derivatives thereof having an average of 0.5 to 10 ethylene oxide or propylene oxide groups per OH group, or, in the case of the $S_6A_4$ polyesters, with tetraacrylates such for example as the tetraacrylates of di-trimethylol propane and pentaerythritol and ethoxylated and propoxylated derivatives thereof having an average of 0.5 to 10 ethylene oxide or propylene oxide groups per OH group.

Highly-branched polyester resins of the $S_3A_2$, $S_4A_2$, $S_4A_3$, $S_6A_2$, $S_6A_3$ and $S_6A_4$ types can be applied by methods known per se, in film thicknesses from 1 to 500 $\mu$m, either alone after thinning where appropriate with the polyfunctional acrylate used to produce them to the required viscosity for the application, or as a mixture of at least two different highly-branched polyester resins of different compositions in respect of their starting monomers, or as a mixture of at least one highly-branched polyester resin with at least one other mono-, di-, tri- or polyacrylate which is known per se and can be used for the intended application, after the addition of 0.1 to 10 % by weight of one or more radical photo-initiators, to substrates of different natures such for example as paper, card, wood, glass, aluminium, tinplate, steel, polyester or cellulose and can be crosslinked by irradiation by photon-emitting radiation sources which are obtainable in technically differing forms, in which case the absorption range and the concentration of the photo-initiators used must be matched to the emission range of the particular radiation source and the thickness of the film to be crosslinked if optimum results are to be achieved.

Monofunctional acrylates suitable as diluents and co-crosslinking agents for highly-branched polyesters having acrylate terminal groups are for example ethoxyethyl acrylate, dodecyl and isobornyl acrylate, 2-hydroxyethyl acrylate, 2-hydroxy-3-phenoxypropyl acrylate, 2-hydroxy-3-butoxypropyl acrylate, and the reaction products of aliphatic or aromatic monoisocyanates with hydroxyalkyl acrylates. Suitable difunctional acrylates are for example di- and tripropylene glycol diacrylate, polyethylene glycol diacrylates of polyethylene glycols having mean molecular weights of between 100 and 1,000 g/mol, butanediol-1,4-diacrylate and hexanediol-1,6-diacrylate. Suitable tri-, tetra- and polyfunctional acrylates are for example the triacrylates of trimethylol propane and glycerine and of the ethoxylated and propoxylated derivatives thereof having an average of 0.5 to 10 ethylene oxide or propylene oxide groups per OH group, the tetraacrylates of di-trimethylol propane and pentaerythritol and of the ethoxylated and propoxylated derivatives thereof having an average of 0.5 to 10 ethylene oxide or propylene oxide groups per OH group, and di-pentaerythritol penta- or hexaacrylate. As well as these there are a large number of commercially available acrylates which were specially developed for radiation curing which are suitable as reactants for the highly-branched polyesters having acrylate terminal groups.

Free-radical-generating photo-initiators suitable for the radiation curing of mixtures which contain at least one highly-branched polyester resin or mixtures which contain at least one highly-branched polyester resin and at least one other mono-, di-, tri- or polyacrylate which is known per se and can be used for the intended application are ones taken from the classes of benzophenones, benzil ketals, dialkoxyacetophenones, hydroxyalkyl acetophenones, aminoalkyl phenones, and acylphosphine oxides, such for example as benzophenone, methyl benzophenone, 4-phenyl benzophenone, 4,4'-bis(dimethylamino)benzophenone, 4,4'-bis(diethylamino)benzophenone, benzil, 2,2-dimethoxy-2-phenyl acetophenone, dimethoxyacetophenone, diethoxyacetophenone, 2-hydroxy-2-methyl-1-phenylpropane-1-one, 2-benzyl-2-dimethylamino-1-(4-morpholinophenyl)-butane-1-one, 2-methyl-1-[4-(methoxythio)-phenyl]-2-morpholinopropane-2-one, 1-hydroxy-cyclohexyl-phenyl ketone, diphenylacylphenylphosphine oxide, diphenyl(2,4,6-trimethylbenzoyl)phosphine oxide, 2,4,6-trimethylbenzoylethoxyphenyl phosphine oxide, and bis(2,4,6-trimethylbenzoyl)phenylphosphine oxide. Other sensitisers, such for example as thioxanthone, isopropyl thioxanthone, diethyl thioxanthone, anthracene und cumarones may be added to increase the efficiency of the photo-initiators, in proportions by weight of from 0.05 to 2 % by weight as a percentage of the entire mixture.

The radiation sources which can be used for the radiation curing of the mixtures according to the invention which contain at least one highly-branched polyester resin are all radiation sources which emit in the UV-A, UV-B or UV-C range or even in the visible range above 400 nm and which are available technically with different outputs and in different forms, and also electron-beam sources.

The radiation-curing mixtures may contain between 10 and 90 % by weight of one or more highly-branched polyester resins having acrylate terminal groups according to EP A 02003299 and between 80 and 10 % by weight of one or more mono-, di-, tri-, tetra-and polyfunctional acrylates which are known per se and, in addition, between 0.1 and 10 % by weight of one or more photo-initiators which are known per se from the classes of the benzophenones, benzil ketals, dialkoxyacetophenones, hydroxyalkyl acetophenones, aminoalkyl phenones and acylphosphine oxides and where appropriate other sensitisers, and paint additives such as levelling agents , antifoaming agents, UV and heat stabilisers and pigments, which are known per se.

The mixtures according to the invention which are used for radiation curing have some surprising and advantageous properties as compared with paint systems which form part of the prior art (US 5,002,976) and are composed of low-viscosity mono-, di-, tri- and polyfunctional acrylates of low molecular weight and, where required, additions of from 0.5 to 50 % by weight of high-viscosity polyester, epoxy and urethane acrylates of higher molecular weight, one or more radical photo-initiators, and other additives.

Compared with conventional commercially available linear polyester acrylates, the highly-branched polyesters with acrylate terminal groups as claimed in EP A 02003299 have, for comparable molecular weights and ranges of distribution, substantially lower viscosities. In this way the Ebecryl-657 polyester acrylate made by the UCB company, which has an average of four acrylate groups per macromolecule, has for example an $M_N$ of 2,110 g/mol with a polydispersity of 4.06 and also contains components of low molecular weight and has a viscosity of 138 Pa s/25°C. Compared with this, a highly-branched polyester as claimed in EP A 02003299 produced from ditrimethylol propane tetrasorbate and ethoxylated trimethylol propane triacrylate has an $M_N$ of 3,250 g/mol, with a width of distribution of 4.25 and a comparable residual acrylate content, and a viscosity of 8.6 Pa s/25°C. The average number of acrylate groups per macromolecule in this polymer is 9.

Something which is particularly advantageous for the use of highly-branched polyesters in radiation-curing systems is the ability which they have to reduce the viscosity of sparingly volatile, low-odour, high-viscosity UV acrylates such as, for example, epoxy acrylates of aromatic diglycidyl ethers, urethane acrylates or unsaturated polyester solutions.

By adding 35 % by weight of a highly-branched $S_3A_2$ polyester resin produced from trimethylol propane-(2,5EO/OH)-trisorbate and dipropylene glycol diacrylate, having an $M_N$ of 1,350 g/mol and an $M_W$ of 2,300 g/mol and a 20 % residual content of dipropylene glycol diacrylate, with a viscosity of 0.07 Pas s/25°C, to 65 % by weight of an aromatic epoxy acrylate based on bisphenol A and having a viscosity of 103 Pa·s/25°C, a paint mixture having a viscosity of 0.8 Pa·s/25°C can be obtained. Following the addition of normal photo-radical initiators, this can be applied to various substrates as 5-100 μm thick films, using normal paint applicators, and can be crosslinked under UV irradiation at radiation doses of between 300 and 500 mJ/cm² to form solvent-resistant paint films with an excellent surface finish which adhere well to aluminium.

Particularly advantageous as thinners are $S_3A_2$ polyester resins which are produced by a Diels-Alder reaction from short-chain ethoxylated or propoxylated trimethylol propane trisorbate or glycerine trisorbate and diacrylates of short-chain diols such for example as butanediol-1,4, hexanediol-1,6, di-, tri- or tetraethylene glycol or di- and tripropylene glycol. These resins have low viscosities of between 0.1 and 2 Pas and have very good solvent properties for a large number of high-viscosity unsaturated products used in practice for curing by radiation. It is with particular advantage that $S_3A_2$ polyester resins of this kind can be used to produce low to medium-viscosity mixtures with epoxy acrylates of aromatic glycidyl ethers, in which case the content of these inexpensive but high-viscosity acrylates may be between 5 and 65 % by weight for viscosities of less than 10 Pas. Such mixtures are odourless, contain only a small proportion of volatile acrylates and show high crosslinking rates and good properties as finishes but can also be mixed with other radiation-curable components, pigments and other additives.

For many areas of application it is also beneficial that the viscosity of solutions of epoxy acrylates in the highly-branched polyester resins shows Newtonian behaviour, unlike solutions of them in diacrylates of low molecular weight such as dipropylene glycol diacrylate for example. Much the same is also true of mixture of highly-branched polyester resins with urethane acrylates and polyester acrylates.

Regardless of their nature and composition, the mixtures which are the subject of the present invention wet very well and level very well when coated wet onto substrates of the most widely varying kinds, which means that unevennesses are immediately smoothed out even when the mixtures are of high viscosity and the wet films are provided with a uniform film thickness before they are crosslinked by radiation curing.

It is also surprising that at contents of more than 20% by weight of a highly-branched polyester resin as claimed in EP A 02003299, the mixtures according to the invention, when radiation cured in air, and hence in the present of $O_2$, and even at high cure rates, at once produce non-tacky, fully cured surfaces and do so irrespective of the kind of radical photo-initiator used and the nature and quantities of the other components of the mixture. In prior-art UV crosslinkable systems, the inhibition of surface curing by oxygen produces tacky surfaces and this means that there has to be a reduction of the cure rates that are effectively possible if the coated parts crosslinked by radiation curing are to be immediately stackable or coilable. With the prior-art techniques, an improvement in surface curing can be achieved by adding so-called amine synergists and above all by crosslinking in an atmosphere of inert gas, such as in pure nitrogen gas for example, cost-intensive though this is.

By contrast, the very much reduced inhibition by oxygen which occurs in the radiation curing of the mixtures according to the invention which contain highly-branched polyester resins as claimed in EP A 02003299 makes very high crosslinking rates possible in an atmosphere of ambient air and hence very low radiation doses in mJ/cm² and is attributable to the 4-methyl-cyclo-2-hexene-1,2- and -1,3-dicarboxylic acid ester groups which are formed during the Diels-Alder reaction between sorbate and acrylate groups and which contain allyl CH groups which react with the oxygen in air.

A particular preference for mixtures which can be quickly radiation-cured to give non-tacky films are ones which contain between 20 and 95 % by weight of one or more $S_4A_3$, $S_6A_2$, $S_6A_3$ or $S_6A_4$ polyester resins together with photo-initiators and, where appropriate, other generally employed UV crosslinkable acrylates and additives. It is possible in this way for wet films up to 250 μm thick of mixtures which contain 10 to 80 % by weight of an $S_4A_3$ polyester resin as detailed in example 11 in EP A 02003299 having an $M_N$ (mean numerical molecular weight) = 2,310 and an $M_W$ (mean weight molecular weight) = 9,700 g/mol, a residual content of 23 % of trimethylol propane triacrylate, and a viscosity of 40 Pas (25°C) in dipropylene glycol diacrylate (DPGDA) and which contain 5 % by weight of an initiator mixture comprising 3 parts diphenyl(2,4,6-trimethylbenzoyl)phosphine oxide and 2 parts 2-hydroxy-2-methyl-1-phenylpropane-1-one, to be crosslinked to form fully cured non-tacky finishes with very good solvent resistance under an electrodeless Fe-doped medium-pressure mercury lamp (D-bulb) made by Messrs. FUSION SYSTEMS at an output energy of 120 W/cm at belt speeds of 50 - 75 m/min, equivalent to a non-tack radiation dosage of 50 - 65 mJ/cm$^2$. With the range of concentrations for the highly-branched polyester resin as given above, the paint viscosities are between 0.03 and 5 Pas in this case, the particularly preferred range of concentrations being from 10 to 70% by weight because at <1 Pas the working viscosities of these mixtures are particularly low.

As far as this is permitted by the viscosities of the highly-branched polyester resins of the $S_4A_3$, $S_6A_2$, $S_6A_3$ or $S_6A_4$ type having residual acrylate contents of between 10 and 30 %, it is also possible for these resins to be applied to substrates on their own, after the addition of one or more initiators, and to be cured by low doses of radiation.

All acrylate, methacrylate and unsaturated polyester mixtures which can be crosslinked by free radicals shrink when polymerised or crosslinked. Generally speaking, the amount of volumetric shrinkage produced by the polymerisation by free radicals of the acrylate double bonds is, with the di-, tri- and polyfunctional acrylates normally used for radiation curing, more than 10% by volume and typically between 12 and 18 % by volume. There are various properties of coatings which depend on the extent of the shrinkage, such as their adhesion to substrates, their surface finish and, with thick films or mouldings, dimensional accuracy. Because of their high shrinkage levels, UV and electron-beam cured acrylate paints have poor adhesion to substrates such as aluminium foils and sheet aluminium and to plastics materials such as polyesters, polyolefins and polyamides.

The lower is the equivalent weight per acrylate double bond for a radiation-curable acrylate, the greater is its volumetric shrinkage. However, the highly-branched polyesters as claimed in EP A 02003299 have higher equivalent weights per acrylate double bond with, at the same time, a larger number of acrylate groups per macromolecule. The equivalent weights and the number of acrylate groups per macromolecule depend on the structure and functionality of the polyfunctional sorbic and acrylic acid esters used to produce the highly-branched polyester resins and on the mean molecular weights obtained.

Depending on the type, structure and concentration of the highly-branched polyesters and the other acrylates in the mixture, the paint mixtures according to the invention show considerably lower volumetric shrinkage than conventional acrylate mixtures when radiation cured.

In this way, mixtures comprising 50 - 80 % weight of a highly-branched $S_3A_2$ polyester produced from trimethylol propane-(2,5 EO/OH)-trisorbate and DPGDA, having an $M_N$ = 1,530, an $M_W$ = 4,160 g/mol, a residual DPGDA content of 11 % and a viscosity of 1.02 Pas, and 50 - 20 % by weight of an epoxy acrylate based on bisphenol A, have shrinkage values of from 5.2 to 4 % by volume and can be crosslinked at radiation doses of 150 - 200 mJ/cm$^2$ in the presence of 5 % by weight of an initiator mixture comprising 3 parts diphenyl-(2,4,6-trimethylbenzoyl)phosphine oxide and 2 parts 2-hydroxy-2-methyl-1-phenylpropane-1-one under an electrodeless, Fe-doped medium-pressure mercury lamp (D-bulb) made by Messrs. FUSION SYSTEMS at an energy output of 120 W/cm at belt speeds of 20 - 35 m/min, equivalent to non-tack radiation doses of 200 - 130 mJ/cm$^2$, to give entirely non-tacky and fully cured paint finishes 6 - 50 μm thick with very good solvent resistance on aluminium foil and untreated PET film, in which case the adhesion to these substrates was so good that adhesive strips (TESA®-4104) pressed onto surface of the paints were unable to lift them even after acting for 30 mins. and the paint films did not delaminate even when the flexible substrates were bent. By contrast, mixtures comprising 50-80 % by weight of DPGDA and 50 - 20 % by weight of the epoxy acrylate, when crosslinked under the same conditions, showed shrinkage levels of between 8.7 and 10.5 %, did not adhere to aluminium and delaminated from untreated PET films. Where the shrinkage levels rise with increasing contents of DPGDA in DPGDA/epoxy acrylate mixtures, they drop with increasing contents of highly-branched polyester resins.

After UV crosslinking under the above conditions, 2-50 μm thick films of mixtures containing 20 - 80 % by weight of the same highly-branched polyester resin in DPGDA showed shrinkage levels of 10 - 4%, with good adhesion existing to aluminium and PET at contents of highly-branched polyester resin of more than 50 % by weight corresponding to volumetric shrinkages of less than 9 %.

Similarly low shrinkage levels are also obtained with paints which contain higher-function $S_4A_3$, $S_6A_2$, $S_6A_3$ or $S_6A_4$ polyester resins, which can be crosslinked with very low radiation doses of 50 - 100 mJ/cm$^2$.

Particularly advantageous are highly-branched $S_4A_3$, $S_6A_2$, $S_6A_3$ or $S_6A_4$ polyester resins of this kind which are produced from tetra- or hexafunctional sorbic acid esters and the di-, tri- or tetraacrylates of ethoxylated or propoxylated diols, triols or tetraols. With 10 to 90% by weight, and preferably 20 to 60 % by weight of one or more highly-branched polyester resins of this kind in one or more low-viscosity acrylates as reactive thinners, such for example as ethoxyethyl acrylate, isobornyl acrylate, di- or tripropylene glycol diacrylate, hexanediol diacrylate or trimethylolpropane triacrylate in combination with 0.1 to 10%, and preferably 2 to 5 % by weight of one or more photo-initiators, it is possible to obtain low shrinkage levels of less that 10% by volume and very good adhesion to many metal and polymer substrates with, at the same time, a low viscosity of less than 1 Pas, and preferably less than 0.5 Pas, and low radiation doses for non-tacky surface and in-depth curing.

The mixtures according to the invention generally have a viscosity of 0.1 to 10 Pas and preferably one of from 0.1 to 2 Pas.

Radiation-curing mixtures of this kind may also contain other generally used additives such as, for example, conventional urethane and polyester acrylates of higher molecular weight, amine synergists, wetting agents and lubricants, antifoaming agents, stabilisers and coloured or white pigments in the concentrations which are normal in the desired applications.

The mixtures according to the invention produce coatings having film thicknesses of between 1 and 500 $\mu$m, and preferably between 2 and 50 $\mu$m, which have a very good surface finish, gloss, low shrinkage and good adhesion to aluminium, steel and tinplate and to many plastics materials, such as PET for example, and which also require only low doses of radiation of from 50 to 100 mJ/cm$^2$ to fully crosslink them, because their surfaces become non-tacky immediately. By selecting the highly-branched polyesters having acrylate terminal groups which are used and the additional acrylates which are employed where required, it is possible to adjust the mechanical and chemical properties of the coatings to suit the particular applications.

Paint mixtures of this kind containing highly-branched $S_4A_3$, $S_6A_2$, $S_6A_3$ or $S_6A_4$ polyester resin contents of from 50 -90 % by weight are also suitable and advantageous for use as radiation-curable primers for radiation-curable paints and printing inks which do not themselves adhere to metal and polymer substrates such as aluminium or PET for example. The coating is performed in this case in two stages, the mixture according to the invention, which adheres very well to the substrate due to its low shrinkage, being applied to the substrate first in film thicknesses of 1 -15 $\mu$m and being radiation cured. After this, the conventional unpigmented or pigmented acrylate mixture is then applied in film thicknesses of 1 - 100 $\mu$m and is radiation cured. In this way it is possible for radiation-curable paints and printing inks developed for the coating of paper, card or wood also to be used for the coating of metals and plastics materials. Composite films of this kind are notable both for their good adhesion to the substrates mentioned and also for very good inter-film adhesion, which is due to the forming of covalent binds between the two films during the crosslinking of the top film. Particularly advantageous as primers are mixtures of this kind containing highly-branched polyesters which produce, after radiation curing, relatively soft films with pencil hardnesses of from 3B to 1H.

Use may for example be made of highly-branched polyesters suitable as primers which are produced from ethoxylated pentaerythritol tetrasorbate or ethoxylated dipentaerythritol hexasorbate and ethoxylated trimethylol propane triacrylate as claimed in EP A 02003299 and which are applied either alone or in mixtures with 10 to 60 % by weight, and advantageously 20 to 40 % by weight, of one or more low-viscosity monofunctional alkyl acrylates, hydroxyalkyl acrylates, epoxy acrylates or urethane acrylates, such for example as dodecyl or isobornyl acrylate, 2-hydroxyethyl acrylate, 2-hydroxy-3-phenoxypropyl acrylate, 2-hydroxy-3-butoxypropyl acrylate, or the reactions products of aliphatic or aromatic monoisocyanates with hydroxyalkyl acrylates, or in mixtures with 10 to 60 % by weight, and advantageously 20 to 40 % by weight, of one or more diacrylates such for example as dipropylene glycol diacrylate, tripropylene glycol diacrylate or hexanediol-1,6-diacrylate, or in mixtures with 10 to 60 % by weight, and advantageously 20 to 40 % by weight, of a mixture of mono- and polyfunctional acrylates and, where required, with the addition of 1 to 20%, and preferably 3 to 10%, by weight of one or more polyfunctional adhesion-promoting epoxy, polyester or urethane acrylates and 1 to 10 % by weight of one or more suitable photo-initiators, in film thicknesses of from 1 to 20 $\mu$m, and preferably 2-10 $\mu$m, to metal and polymer substrates, such for example as aluminium foils and polyester films, and which are crosslinked with radiation doses of between 20 and 500 mJ/cm$^2$, and advantageously between 50 und 250 mJ/cm$^2$. Directly after this, radiation-curable clear coats, pigmented paints or printing inks can be applied in film thicknesses of between 1 and 100 $\mu$m, and preferably between 3 and 50 $\mu$m, and can be crosslinked on the primer by a further irradiation process at radiation doses of between 20 and 500 mJ/cm$^2$, and preferably between 50 and 250 mJ/cm$^2$. This upper film then has very good adhesion to the primer which was crosslinked first and hence to the substrate.

The advantages of this process are that radiation-curable paints and printing inks which already exist and have been formulated and optimised for use on other substrates can also be used for coating onto the substrates mentioned, such as aluminium and PET for example, and that the crosslinking of the primer, which contains highly-branched polyesters, can take place at the same crosslinking rate as for the radiation-curing top coat or printing ink. This makes it possible for aluminium and plastics materials to be continuously provided, on a coating line or a printing press, with radiation-cured coatings or print which adhere well, at high speeds.

Due to the wide variety of structures which are possible for them, the large number of acrylate groups they have at high molecular weights, their lower viscosity than conventional polyester acrylates and the low odour they have, the highly-branched polyesters having acrylate terminal groups as claimed in EP A 02003299 have properties of technical and industrial interest, as shown in the following examples, when used either alone or in mixtures with other acrylates and can therefore be used for a large number of applications of radiation-curing mixtures.

Examples

Examples of the synthesis of highly-branched polyesters having acrylate groups (HBAPE 1 - 5):

Example of synthesis 1 (HBAPE-1)

300 ml of $H_2O$ and 0.370 g of Na-dodecyl sulphate (NaDS) were placed in a 1 l three-necked flask having a magnetic stirring rod, an internal thermometer, a gas inlet tube and a reflux cooler and the flask was twice evacuated with a diaphragm pump and filled with $N_2$. A mixture of 146.4 g (0.20 mol) of TMP-$(EO)_{2,5}$-trisorbate and 135.8 g (0.60 mol) of hexanediol- 1,6-diacrylate (HDDA) and 0.140 g of BHT, which mixture had been purged with $N_2$, was then stirred into the aqueous phase within 15 minutes and the emulsion was heated to 93°C over an oil bath and was stirred for 21.5 hours. The mixture was then cooled and after the stirrer was switched off two phases formed. The lower, turbid, organic phase was mixed with 300 ml of toluene and the water contained in the resin was removed azeotropically. The yield of toluene-free resin was 266.9 g = 95% of the theoretical yield. The following values were determined:
$M_N$ = 2,100 g/mol, $M_W$ = 10,100 g/mol, residual HDDA = 20%, viscosity: 0.83 Pa·s (25°C).

Example of synthesis 2 (HBAPE-2):

A solution of 290 g (1.2 mol) of dipropylene glycol diacrylate (DPGDA) and 0. 12 g of phenothiazine in 200 ml of industrial xylene was heated to 139°C under $N_2$ in a 1 1 three-necked flask having a magnetic stirring rod, an internal thermometer, a gas inlet tube and a reflux cooler and 83 g (0.2 mol) of trimethylol propane trisorbate was then dropped in over a period of 3.5 hrs. Stirring then took place for a further 35 mins at this temperature and the xylene was distilled off under vacuum provided by a diaphragm pump. 370 g was left of a clear, slightly yellow coloured resin having the following characteristics:
$M_N$ = 1,360 g/mol, $M_W$ = 2,300 g/mol, residual DPGDA = 16%, viscosity: 0.1 Pays (25°C).

Example of synthesis 3 (HBAPE-3):

300 ml of $H_2O$ was placed in a 1l three-necked flask having a magnetic stirring rod, an internal thermometer, a gas inlet tube and a reflux cooler, the flask was evacuated twice with a diaphragm pump and filled with $N_2$. A mixture of 146.4 g (0.20 mol) of TMP-$(EO)_{2,5}$-trisorbate and 145.4 g (0. 60 mol) of DPGDA and 0.140 g of BHT, which mixture had been purged with $N_2$, was stirred into the aqueous phase within 15 minutes and the emulsion was heated to 93°C over an oil bath and stirred for 18 hours. The mixture was then cooled and after the stirrer was switched off two phases formed. The lower, turbid, organic phase was separated off and the water contained in the resin was removed under vacuum provided by a diaphragm pump, leaving a clear resin. The yield was 89.3% of the theoretical yield. The following values were determined: $M_N$ = 1,530 g/mol, $M_W$ = 4,160 g/mol, residual DPGDA = 11%, viscosity: 1.02 Pa·s (25°C).

Example of synthesis 4 (HBAPE-4):

A 3l flat flanch reaction vessel fitted with an anchor stirrer, contact thermometer, gas inlet tube and reflux cooler containing 1740 ml of $H_2O$, in which 0.8 g of BHT had been dissolved as an inhibitor, was three times alternately evacuated with an vacuum pump and filled with $N_2$. A mixture of 219 g (0.339 mol) of pentaerythritol-(0.75EO/OH)-tetrasorbate and 580.4 g (1.356 mol) of 1,1,1-trimethylol propane-(1EO/OH)-triacrylate (TMPEOTA), which mixture had been purged with $N_2$, was then stirred into the aqueous phase over a period of 30 minutes and was heated to 91-93°C within 1.5 hours with an oil bath and was stirred at this temperature for 18.5 hours under a low flow of $N_2$. After the stirrer was switched off, two turbid phases separated in the course of cooling. The water was removed from the lower, organic phase under vacuum provided by a diaphragm pump. What was left was 735.4 g = 92% of the theoretical yield of a clear resin. The following values were determined: $M_N$ = 3,050 g/mol, $M_W$ = 9,400 g/mol, residual TMPEOTA = 29%, viscosity: 2.0 Pa·s (25°C).

Example of synthesis 5 (HBAPE-5):

A 3l flat flanch reaction vessel fitted with an anchor stirrer, a contact thermometer, a gas inlet tube and a reflux cooler containing 1250 ml of $H_2O$, in which 0.8 g of BHT had been dissolved as an inhibitor, was three times alternately evacuated with a diaphragm pump and filled with $N_2$. A mixture of 156.5 g (0.25 mol) of di-trimethylol propane tetrasorbate and 429 g (1.0 mol) of 1,1,1-trimethylolpropane-(1EO/OH)-triacrylate (TMPEOTA), which mixture had been purged with

$N_2$, was then stirred into the aqueous phase over a period of 30 minutes and was heated to 95-98°C within 1.5 hours with an oil bath and was stirred at this temperature for 18 hours under a low flow of $N_2$. After the stirrer was switched off, two turbid phases separated in the course of cooling. The water was removed from the lower, organic phase under vacuum provided by a diaphragm pump. What was left was 493 g = 84% of the theoretical yield of a clear resin. The following values were determined $M_N$ = 3,250 g/mol, $M_W$ = 13,100 g/mol, residual TMPEOTA = 26%, viscosity: 8.6 Pa·s (25°C).

Example of synthesis 6 (HBAPE-6):

A 3 1 flat flanch reaction vessel fitted with an anchor stirrer, a contact thermometer, a gas inlet tube and a reflux cooler containing 1,600 ml of $H_2O$, in which 0.7 g of phenothiazine had been dissolved as an inhibitor, was three times alternately evacuated with a diaphragm pump and filled with $N_2$. A mixture of 240 g (0.17 mol) of di-pentaerythritol-(2 EO/OH)-hexasorbate, produced by the direct esterification of di-pentaerythritol-(2 EO/OH) (polyol DPP 130 [Perstorp polyol] with sorbic acid, and 448 g (1.05 mol) of 1,1,1-trimethylol propane-(1EO/OH)-triacrylate (TMPEOTA), which mixture had been purged with $N_2$, was then stirred into the aqueous phase over a period of 20 min. and was heated to 90-92°C within 1.5 hours with an oil bath and was stirred at this temperature for 15 hours under a low flow of $N_2$. After the stirrer was switched off, two turbid phases separated in the course of cooling. The water was removed from the lower, organic phase under vacuum provided by a diaphragm pump. What was left was 627 g = 91.1 % of the theoretical yield of a clear resin. The following values were determined: $M_N$ = 7,000 g/mol, $M_W$ = 75,200 g/mol, residual TMPEOTA = 27%, viscosity: 13.2 Pa's (25°C).

Examples of applications

Methods of investigation employed:

Except where otherwise described, the radiation-curing mixtures in the examples of applications were produced by mixing the liquid components and if necessary by heating briefly to 60 - 70°C. The viscosities of the mixtures were determined with an ICI plate and cone viscosimeter [EIT Instruments] at a temperature of 25°C. The mixtures were applied by paint applicators to glass plates (18 x 12 x 0.2 cm), aluminium foils or polyester films in wet film thicknesses of 6.7, 12 or 50 $\mu$m and were irradiated, on a UV irradiation system [FUSION SYSTEMS, Gaithersburg, MD, USA] comprising an F-300 lamp with an electrodeless, microwave-powered Fe-doped mercury high-pressure source (D-bulb) whose main emission was between 350 and 440 nm and an LC-6 conveyor belt whose speed could be varied between 15 and 75 m/min, at one or more belt speeds sufficiently often for the film of paint to cure and its surface to be non-tacky. The UV dose between 320 and 450 nm in mJ/cm$^2$ which was incident during one irradiation pass was measured at various belt speeds with a UVICURE Radiometer [EIT, Sterling, Va, USA], the measurements were plotted in a graph against the belt speeds and this calibration curve was used to determine the minimum UV dose required which would give a non-tacky surface for the paint and a fully cured paint film. The incident dose was 190 mJ/cm$^2$ at 1x16m/min, 130 mJ/cm$^2$ at 1x25 m/min, 90 mJ/cm$^2$ at 1x35 m/min, 55 mJ/cm$^2$ at 1x50 m/min and 40 mJ/cm$^2$ at 1x70 m/min.

To determine solvent resistance as a qualitative indication of the density of crosslinking, the exposed paint films were rubbed with an absorbent paper soaked in methyl ethyl ketone (MEK). An MEK resistance (MEK-DS) of ≥ 75 double strokes (DS) without the film detaching, swelling or suffering surface abrasion was taken to be very good. A resistance of <5 double strokes was deemed to show inadequate crosslinking.

The non-tackiness of the crosslinked films was tested by a thumbprint. If the thumb failed to leave a trace on the surface, the surface was considered non-tacky.

The pencil hardness of the cured films was determined with a set of pencils (Faber-Castell) of hardnesses from 8B to 7H.

The König pendulum hardness under DIN 53157 was measured on paint films on glass with a wet film thickness of ≥ 50 $\mu$m.

The adhesion of the crosslinked films was determined with strips of adhesive film (TESA-4104 [Beiersdorf AG]) which were pulled off the crosslinked films 30 minutes after being pressed onto them with the thumbs (30' adhesive test). The adhesion was considered good (+) if the cured film remained on the substrate and inadequate (-) if the whole of it was pulled off the particular substrate with the adhesive strip. In a number of cases the cross-cut test detailed in JIS K 5400 was carried out, in which a cross with arms each 4 cm long at an angle of 45° is scored in the crosslinked film with the point of a knife and the strip of adhesive mentioned is pressed down onto it with the thumbs and at once pulled off again. A distinction is made in this case between removal of 0%, 25%, 50% and 100% of the film from the substrate.

The volumetric shrinkage of the paint films caused by the radiation curing was determined from density measurements at 20°C ($\pm$0.1 °C) and the equation:

$$\text{Volumetric shrinkage [\%]} = \frac{\delta^{20} \text{ (spec. density of crosslinked film)} - \delta^{20} \text{ (spec. density of paint)}}{\delta^{20} \text{ (spec. density of crosslinked film)}} \times 100$$

The specific densities of the liquid paint mixtures were exactly determined to three decimal places after the decimal point by weighing with a 5 ml Gay-Lussac pyknometer. To allow the specific density of the crosslinked films to be determined, 50 μm thick wet films of the paint mixture being examined were fully UV crosslinked on glass plates at a belt speed of 1x16 m/min, strips of paint measuring approx. 2x1 cm were pulled off the glass plates and introduced one after the other into a set of test tubes which were filled with 2 to 40 % by weight potassium iodide (KI) solutions whose specific density $\delta^{20}$ had been determined beforehand pyknometrically to the same accuracy as that of the paints. A crosslinked film is of the same density as KI solution in which it floats. Where required the film density was determined by interpolation between two neighbouring solutions. The absolute error was estimated as $\pm$ 0.3 - 0.5 % by comparison with the known volumetric shrinkage of certain crosslinked polyfunctional acrylates.

All the percentages given in the examples are percentages by weight.

Example of application 1

10 g was produced of each of paint mixtures which contained the highly-branched polyester resin HBAPE-3 and dipropylene glycol diacrylate (DPGDA) in proportions by weight of: a.) 0:100, b.) 20:80, c.) 50:50, d.) 65:35, and e.) 80:20 and which were each mixed with 5 % of a photo-initiator mixture composed of 3 parts diphenyl-(2,4,6-trimethylbenzoyl)-phosphine oxide and 2 parts 2-hydroxy-2-methyl-1-phenylpropane-1-on (photo-initiator mixture 1). These mixtures were applied to glass plates as 50 μm thick wet films and to aluminium foils and PET films as 12 μm thick wet films and were crosslinked with the UV lamp described at a belt speed of 1 x 20 m/min corresponding to a dose of 150 mJ/cm$^2$. The crosslinked films of paints b.) - e.) were at once non-tacky, high-gloss, transparent and free of defects. The results of the paint tests carried out on them are shown in Table 1.

Table 1: Paint mixtures: UV crosslinked HBAPE-3/DPGDA mixtures

| HBAPE-3/DPGDA mixture | Viscosity [Pas/25°C] | MEK-DS | Shrinkage [%] | 30' adhesive test on | |
|---|---|---|---|---|---|
| | | | | Al | PET |
| a.) 0/100 | 0.015 | >75 | 11.8 | - | - |
| b.) 20/80 | 0.025 | <50 | 11.0 | - | + |
| c.) 50/50 | 0.095 | <30 | 9.3 | - | + |
| d.) 65/35 | 0.185 | <20 | 7.0 | + | + |
| e.) 80/20 | 0.380 | <20 | 4.8 | + | + |

Example of application 2

10 g was produced of each of paint mixtures which contained the highly-branched polyester resin HBAPE-2 and the aromatic epoxy acrylate EPAC-1 [REICHHOLD GmbH] in proportions by weight of: a.) 50:50, b.) 65:35 and c.) 80:20 and which were each mixed with 5 % of photo-initiator mixture 1 described in example of application 1. The UV crosslinking took place at 1x16 m/min = 190 mJ/cm$^2$. The crosslinked films of all the mixtures were at once non-tacky, high-gloss, transparent and free of defects. The results of the tests carried out on them are shown in Table 2.

Table 2: Test results for UV crosslinked HBAPE-2/EPAC-1 mixtures

| HBAPE-2/EPAC-1 mixture | Viscosity [Pas/25°C] | MEK-DS | Shrinkage [%] | Pendulum hardness, glass [s] | 30' adhesive test on Al |
|---|---|---|---|---|---|
| a.) 20/80 | 14.1 | >75 | Not determined | 191 | + |
| b.) 50/50 | 1.7 | >75 | 5.2 | 164 | + |
| c.) 65/35 | 0.8 | >75 | 4.9 | 123 | + |

(continued)

| HBAPE-2/EPAC-1 mixture | Viscosity [Pas/25°C] | MEK-DS | Shrinkage [%] | Pendulum hardness, glass [s] | 30' adhesive test on Al |
|---|---|---|---|---|---|
| d.) 80/20 | 0.3 | <50 | 4.0 | 76 | + |

Example of application 3

As a comparison, paint mixtures which contained the same proportions by weight of DPGDA, EPAC-1 and photo-initiator were crosslinked under the same conditions. After leaving the lamp, all the crosslinked films had a tacky, smeared surface. The results are shown in Table 3.

Table 3: Test results for UV crosslinked DPGDA/EPAC-1 mixtures

| DPGDA/EPAC-1 mixture | Viscosity [Pas/25°C] | MEK-DS | Shrinkage [%] | Pendulum hardness, glass [s] | 30' adhesive test on Al |
|---|---|---|---|---|---|
| 20/80 | 7.6 | >75 | 6.6 | 206 | + |
| 50/50 | 0.3 | >75 | 8.4 | 219 | - |
| 65/35 | 0.09 | >75 | 9.8 | 166 | - |
| 80/20 | 0.03 | <50 | 10.7 | 107 | - |
| 100/0 | 0.015 | >75 | 11.5 | 25 | - |

Example of application 4:

10 g was produced of each of paint mixtures which contained the highly-branched polyester resin HBAPE-1 and EPAC-1 [REICHHOLD GmbH] in proportions by weight of: a.) 50 : 50, b.) 65 : 35 and c.) 80 : 20 and which were each mixed with 4 % of 2,2-dimethoxy-1,2-diphenyl ethane-1-one. These mixtures were applied to glass plates as 50 $\mu$m thick wet films and to aluminium foils and PET films as 12 $\mu$m thick wet films and were UV crosslinked at a belt speed of 1x16 m/min corresponding to a dose of 190 mJ/cm$^2$. The crosslinked films of paints a.) - c.) were at once non-tacky, transparent, high-gloss and free of defects. The results of the paint tests carried out on them are shown in Table 4.

Table 4: Test results for UV crosslinked HBAPE-1/EPAC-1 mixtures

| HAPE-1/DPGDA mixture | Viscosity [Pas/25°C] | MEK-DS | Pendulum hardness, glass [s] | 30' adhesive test on | |
|---|---|---|---|---|---|
| | | | | Al | PET |
| a.) 50/50 | 6.4 | >75 | 114 | + | + |
| b.) 65/35 | 3.2 | <70 | 117 | + | + |
| c.) 80/20 | 1.6 | >75 | 92 | + | + |

Example of application 5

10 g was produced of each of paint mixtures which contained the highly-branched polyester resin HBAPE-1 and dipropylene glycol diacrylate (DPGDA) in proportions by weight of: a.) 20 : 80, b.) 35 : 65, c.) 50 : 50, d.) 65 : 35 and e.) 80 : 20 and which were each mixed with 5 % of photo-initiator mixture 1. These mixtures were applied to glass plates as 50 $\mu$m thick wet films and to aluminium foils and PET films as 12 $\mu$m thick wet films and were UV crosslinked at a belt speed of 1x16 m/min corresponding to a dose of 190 mJ/cm$^2$. The crosslinked films of paints a.) - e.) were at once non-tacky, high-gloss, transparent and free of defects. The results of the paint tests carried out on them are shown in Table 5.

Table 5: Test results for UV crosslinked HBAPE-1/DPGDA mixtures

| HBAPE-1/DPGDA mixture | Viscosity [Pas/25°C] | MEK-DS | Pendulum hardness, glass [s] | 30' adhesive test on | |
|---|---|---|---|---|---|
| | | | | Al | PET |
| a.) 20/80 | 0.025 | >75 | 31 | - | + |
| b.) 35/65 | - 0.045 | <15 | 44 | + | + |
| c.) 50/50 | 0.080 | >5 | 41 | + | + |
| d.) 65/35 | 0.16 | >3 | 47 | + | - |
| e.) 80/20 | 0.30 | <3 | 58 | + | - |

Example of application 6

10 g was produced of each of paint mixtures which contained the highly-branched polyester resin HBAPE-1 and hexanediol-1,6-diacrylate (HDDA) in proportions by weight of: a.) 20 : 80, b.) 35 : 65, c.) 50 : 50, d.) 65 : 35 and e.) 80 : 20 and the amount were each mixed with 5 % of photo-initiator mixture 1. These mixtures were applied to glass plates as 50 $\mu$m thick wet films and to aluminium foils and PET films as 12 $\mu$m thick wet films and were UV crosslinked at a belt speed of 1x16 m/min corresponding to a dose of 190 mJ/cm$^2$. The crosslinked films of mixtures a.) - e.) were at once non-tacky, high-gloss, transparent and free of defects. The results of the paint tests carried out on them are shown in Table 6.

Table 6: Test results for UV crosslinked HBAPE-1/HDDA mixtures

| BBAPE-1/HDDA mixture | Viscosity [Pas/25°C] | MEK-DS | Pendulum hardness, glass [s] | 30' adhesive test on | |
|---|---|---|---|---|---|
| | | | | Al | PET |
| a.) 20/80 | 0.015 | >75 | 64 | - | + |
| b.) 35/65 | 0.030 | <20 | 67 | - | + |
| c.) 50/50 | 0.053 | >25 | 73 | - | + |
| d.) 65/35 | 0.11 | >15 | 126 | - | + |
| e.)80/20 | 0.23 | <18 | 92 | + | + |

Example of application 7:

10 g was produced of each of paint mixtures which contained the highly-branched polyester resin HBAPE-4 and dipropylene glycol diacrylate (DPGDA) in proportions by weight of: a.) 0 : 100, b.) 20 : 80, c.) 50 : 50, d.) 65 : 35, e.) 80 : 20 and f.) 100 : 0 and which were each mixed with 5 % of photo-initiator mixture 1. These mixtures were applied to glass plates as 50 $\mu$m thick wet films and to aluminium foils and PET films as 12 $\mu$m thick wet films and were then UV crosslinked at a belt speed of 1x50 m/min corresponding to a dose of 55 mJ/cm$^2$. The crosslinked films of paints c.) - f.) were at once non-tacky, high-gloss and free of defects. The results of the paint tests carried out on them are shown in Table 7.

Table 7: Test results for UV crosslinked HBAPE-4/DPGDA mixtures

| HBAPE-4/DPGDA mixture | Viscosity [Pas/25°C] | MEK-DS | Shrinkage [%] | Pencil hardness /glass | 30' adhesive test on | |
|---|---|---|---|---|---|---|
| | | | | | Al | PET |
| a.) 0/100 | 0.015 | >75 | 11.8 | 5H | - | - |
| b.) 20/80 | 0.025 | >75 | 11.1 | 2H | + | + |
| c.) 50/50 | 0.125 | >75 | 9.5 | H | + | + |
| d.) 65/35 | 0.30 | >75 | 8.9 | HB | + | + |
| e.) 80/20 | 0.78 | >75 | 7.9 | 2B | + | + |
| f.) 100/0 | 2.0 | >75 | 6.3 | 4B | + | + |

Example of application 8:

10 g was produced of each of paint mixtures which contained the highly-branched polyester resin HBAPE-5 and dipropylene glycol diacrylate (DPGDA) in proportions by weight of: a.) 30 : 70, b.) 40 : 60, c.) 50 : 50 and d.) 80 : 20 and which were each mixed with 5 % of photo-initiator mixture 1. These mixtures are applied to glass plates as 50 μm thick wet films and to aluminium foils and PET films as 12 μm thick wet films and were UV crosslinked at a belt speed of 1x20 m/min corresponding to a dose of 150 mJ/cm$^2$. The crosslinked films of paints a.) - d.) were at once non-tacky, high-gloss, transparent and free of defects. The results of the paint tests carried out on them are shown in Table 8.

Table 8: Paint mixtures comprising UV crosslinked HBAPE-5/DPGDA mixtures

| HBAPE-5/DPGDA mixture | Viscosity [Pas/25°C] | MEK-DS | Pencil hardness/ glass | Pendulum hardness, glass [s] | 30' adhesive test on | |
|---|---|---|---|---|---|---|
| | | | | | Al | PET |
| a.) 30/70 | 0.12 | >75 | 4H | 171 | + | + |
| b.) 40/60 | 0.23 | >75 | 4H | 147 | + | + |
| c.) 50/50 | 0.45 | >75 | 5H | 152 | + | + |
| d.) 80/20 | 2.8 | >75 | 5B | 178 | + | + |

Example of application 9:

10 g was produced of each of paint mixtures which contained the highly-branched polyester resin HBAPE-5 and the urethane monoacrylate Genomer-1122™ (G-1122) [RAHN-Chemie, Zürich] in proportions by weight of: a.) 20 : 80, b.) 35 : 65, c.) 50 : 50 and d.) 65 : 35 and which were each mixed with 5 % of photo-initiator mixture 1. These paint mixtures were applied to aluminium panels (Q-panels) and PET films as 6.7 μm thick wet films and were UV crosslinked at a belt speed of 1x25 m/min corresponding to a dose of 130 mJ/cm$^2$. The crosslinked films of paints a.) - d.) were at once non-tacky, high-gloss, transparent and free of defects. The results of the paint tests carried out on them are shown in Table 9.

Table 9: Test results for UV crosslinked HBAPE-5/Genomer-1122 (G-1122) mixtures

| HBAPE-5/G-1122 mixture | Viscosity [Pas/25°C] | MEK-DS | Pencil hardness /PET | 30' adhesive test on | |
|---|---|---|---|---|---|
| | | | | Al | PET |
| a.) 20/80 | 0.14 | <5 | 8B | + | + |
| b.) 35/65 | 0.20 | <10 | 8B | + | + |
| c.) 50/50 | 0.48 | >75 | 7B | + | + |
| d.) 65/35 | 0.92 | >75 | 4B | + | - |

Example of application 10:

10 g was produced of each of paint mixtures which contained the highly-branched polyester resin HBAPE-6 and either a.) DPGDA, b.) HDDA or c.) Genomer-1122™ (G-1122) as a thinner in proportions by weight of 57 : 43 in each case and which were each mixed with 7 % of photo-initiator mixture 1. These mixtures were applied to aluminium foils and PET films as 6.7 μm thick wet films and were UV crosslinked at a belt speed of 1x70 m/min corresponding to a dose of 40 mJ/cm$^2$. The crosslinked films of paints a.) - d.) were at once non-tacky, high-gloss and transparent on leaving the lamp. The results of the paint tests carried out on them are shown in Table 10.

Table 10: Test results for mixtures of polyester HBAPE-6 with various thinners

| HBAPE-6/thinner mixture | Viscosity [Pas/25°C] | MEK-DS | 30' adhesive test | | Cross-cut test | |
|---|---|---|---|---|---|---|
| | | | Al | PET | Al | PET |
| a.) DPGDA 57/43 | 0.88 | <30 | + | + | 0 | 100 |
| b.) HDDA 57/43 | 0.26 | <25 | + | + | 50 | 0 |

(continued)

| HBAPE-6/thinner mixture | Viscosity [Pas/25°C] | MEK-DS | 30' adhesive test | | Cross-cut test | |
|---|---|---|---|---|---|---|
| | | | Al | PET | Al | PET |
| c.) G-1122 57/43 | 1.16 | <20 | - | + | 0 | 0 |
| | | | | | % of film removed | |

Example of application 11:

Aluminium foils and PET films were coated with 6.7 $\mu$m thick wet films of the paint mixtures in example 10 and were crosslinked under the UV lamp at a belt speed of 1x50 m/min corresponding to a dose of 55 mJ/cm$^2$. 6.7 $\mu$m thick wet films of the commercial UV crosslinkable printing inks 14HF29 (clear coat) and 14HF53 (white ink) [SUN Europe], which already contain photo-initiators, were then applied to the UV crosslinked films of paint mixtures a. -c. in example 10 and were UV crosslinked at the same belt speed. As a comparison, the two commercial products were applied alone to both substrates in the same film thickness and were UV crosslinked under the same conditions. The results of the tests that were carried out are shown in Table 11.

Table 11: Test results with the paints in example of application 10 as primers

| | 30' adhesive test on | | Cross-cut test on | |
|---|---|---|---|---|
| | Al | PET | Al | PET |
| 14 HF29 (clear coat) | + | + | 50 | 100 |
| 14HF53 (white paint) | - | - | 100 | 100 |
| 10 a.) + 14HF29 | + | + | 50 | 0 |
| 10 a.) + 14HF53 | + | - | 100 | 100 |
| 10 b.) + 14HF29 | + | + | 0 | 0 |
| 10 b.) + 14HF53 | + | + | 100 | 50 |
| 10 c.) + 14HF29 | + | + | 0 | 0 |
| 10 c.) + 14HF53 | + | + | 50 | 100 |
| | | | % of film removed | |

Example of application 12:

10 g was produced of each of paint mixtures which contained the highly-branched polyester resin HBAPE-4 and, as a thinner, either DPGDA in proportions by weight of a.) 70 : 30 and b.) 80 : 20 or Genomer-1122™ (G-1122) in proportions by weight of c.) 50 : 50 and d.) 65 : 35 or HDDA in proportions by weight of e.) 65 : 35 and f.) 80 : 20, and in each of which 4 % of bis-(2,4,6-trimethylbenzoyl)-phenyl phosphine oxide (Irgacure-801™ [CIBA]) was dissolved under heat. These mixtures were applied to aluminium panels (Q-panels) and PET films as 6.7 $\mu$m thick wet films and were then UV crosslinked at a belt speed of 1x50 m/min corresponding to a dose of 55 mJ/cm$^2$. The crosslinked films of mixtures a.) - f.) were at once non-tacky, colourless and high-gloss on leaving the lamp. The results of the tests carried out on them are shown in Table 12.

Table 12: Test results for UV crosslinked HBAPE-4/thinner mixtures

| HBAPE-4/thinner mixture | Viscosity [Pas/25°C] | MEK-DS | 30' adhesive test on | | Cross-cut test on | |
|---|---|---|---|---|---|---|
| | | | Al | PET | Al | PET |
| a.) DPGDA 70/30 | 0.74 | >75 | + | + | 100 | 100 |
| b.) DPGDA 80/20 | 1.02 | >75 | + | + | 50 | 100 |
| c.) G-1122 50/50 | 0.27 | <60 | + | + | 50 | 50 |
| d.) G-1122 65/35 | 0.64 | >75 | + | + | 25 | 25 |

(continued)

| HBAPE-4/thinner mixture | Viscosity [Pas/25°C] | MEK-DS | 30' adhesive test on | | Cross-cut test on | |
|---|---|---|---|---|---|---|
| | | | Al | PET | Al | PET |
| e.) HDDA 65/35 | 0.24 | >75 | + | + | 100 | 25 |
| f.) HDDA 80/20 | 0.62 | >75 | - | + | 100 | 0 |
| | | | | | % of film removed | |

Example of application 13:

Aluminium foils and PET films were coated with 6.7 μm thick wet films of a paint mixture comprising 70 % of the highly-branched polyester HBAPE-4 and 30 % of DPGDA, to which was added 5 % of photo-initiator mixture 1, and were UV crosslinked under the UV lamp at a belt speed of 1x35 m/min = 90 mJ/cm$^2$. All the crosslinked films were at once non-tacky. The following paints were applied to respective ones of the samples which had been coated as top coats in wet film thicknesses of 6.7 μm and were UV crosslinked at the same belt speed:

    a.) 87% of DPGDA + 13 % of ethoxylated trimethylolpropane triacrylate (TMPEOTA) + 5 % of photo-initiator mixture 1
    b.) commercial clear coat 14HF29 [SUN Europe]; contains photo-initiator
    c.) commercial white printing ink 14HF28 [SUN Europe]; contains photo-initiator

As a comparison, paints a.) - c.) were also applied directly to both substrates as a primer in 6.7 μm thick wet films and were UV crosslinked at the same belt speed. The results of the paint tests on the films directly crosslinked on the substrates and on the primer/top coat combinations are shown in Table 13. The coated aluminium foils and PET films were also bent to allow any cracking or de-adhesion of the films to be observed. Attempts to remove the films of top coat separately resulted in both films being removed, which meant that there was good inter-film adhesion, as was also confirmed by an increase in the resistances to MEK of top coats b.) and c.) as compared with their resistances when crosslinked directly on the substrates. Differences in the properties of the crosslinked films on aluminium foil and PET film resulted from the fact that the PET films were non-reflective.

Table 13: Test results for primer/top coat combinations

| Primer | Top coat | MEK-DS | | Pencil hardness | | 30' adhesive test | | Cross-cut test | | Flexibility | |
|---|---|---|---|---|---|---|---|---|---|---|---|
| | | Al | PET | Al | PET | Al | PET | Al | PET | Al | PET |
| 70% HBAPE-4 + 30% DPGDA | | >75 | <20 | 2B | B | + | + | 0 | 25 | + | + |
| a.) 87% DPGDA+ 13% TMPEOTA | | >75 | >75 | HB | HB | - | - | 100 | 100 | + | Cracks |
| b.) 14HF29 (clear coat) | | <5 | <5 | 6H | 3H | + | + | 100 | 50 | + | + |
| c.) 14HF29 (white paint) | | <5 | <5 | 3B | 5B | - | - | 100 | 100 | + | + |
| 70HBAPE-4+30DPGDA+ | a) | >75 | >75 | H | HB | - | + | 50 | 25 | Cracks | + |
| | b.) | >75 | >75 | 6H | 6H | + | + | 0 | 25 | + | + |
| | c.) | <60 | <30 | 2H | 3B | + | + | 0 | 25 | + | + |
| | | | | | | | | % of film removed | | | |

**Claims**

1. Mixture for producing radiation-cured films, comprising

    (a) a highly-branched polyester having acrylate terminal groups, obtainable by polymerising m-functional sorbic acid esters as a component A and n-functional acrylic acid esters as a component B in a Diels-Alder reaction at a temperature of from 50 to 150°C,
    where

        (i) m and n are natural numbers from 2 to 6 and the difference between m and n is at least 1 and
        (ii) components A and B are used in a ratio between the numbers of moles that satisfies the following equation (1):

$$n_e/n_v \geq f_v - 1 \qquad (1)$$

        where $n_e$ is the number of moles of the component of lower functionality, $n_v$ is the number of moles of the component of higher functionality and $f_v$ is the functionality of the component of higher functionality, and

    (b) a photo-initiator.

2. Mixture according to claim 1, **characterised in that** the photo-initiator is selected from the group comprising benzophenones, benzil ketals, dialkoxyacetophenones, hydroxyalkyl acetophenones, aminoalkyl phenones and acylphosphine oxides.

3. Mixture according to claim 1 or 2, **characterised in that** it also contains:

    (c) various mono-, di-, tri-, tetra- or polyacrylates of the highly-branched polyester and, where required,
    (d) normal additives and/or pigments.

4. Mixture according to claim 1 or 2, **characterised in that** it comprises the highly-branched polyesters in a quantity of from 90 to 99.9% by weight and the photo-initiator in a quantity of from 0.1 to 10% by weight.

5. Mixture according to claim 3, **characterised in that** it comprises 10 to 90 % by weight of highly-branched polyesters, 0.1 to 10 % by weight of the photo-initiator, 20 to 80 % by weight of mono-, di-, tri-, tetra- or polyacrylate and, where required, normal additives and/or pigments to make up the remainder.

6. Mixture according to claims 1 to 5, **characterised in that** the highly-branched polyester was produced from the following components

    a) trisorbate(v) + diacrylate(e); $n_e/n_v \geq 2$; ($S_3A_2$ acrylate polyester)
    b) tetrasorbate(v) + diacrylate(e); $n_e/n_v \geq 3$; ($S_4A_2$ acrylate polyester)
    c) tetrasorbate(v) + triacrylate(e); $n_e/n_v \geq 3$; ($S_4A_3$ acrylate polyester)
    d) hexasorbate(v) + diacrylate(e); $n_e/n_v \geq 5$; ($S_6A_2$ acrylate polyester)
    e) hexasorbate(v) + triacrylate(e); $n_e/n_v \geq 5$; ($S_6A_3$ acrylate polyester)
    f) hexasorbate(v) + tetraacrylate(e); $n_e/n_v \geq 5$; ($S_6A_4$ acrylate polyester)

    where $n_e/n_v$ is the molar ratio components (e) and (v).

7. Mixture according to claims 1 to 6, **characterised in that** the molecular weight of the highly-branched polyester is 1,000 to 50,000 g/mol.

8. Mixture according to claims 1 to 7, **characterised in that** the highly-branched polyester still contains 5 to 30% of unreacted polyfunctional acrylate.

9. Mixture according to claims 1 to 8, **characterised in that** its viscosity is 0.1 to 10 Pas.

10. Mixture according to claim 6, **characterised in that** the highly-branched polyester is an $S_4A_3$, $S_6A_2$, $S_6A_3$, $S_6A_4$ polyester.

11. Mixture according to claim 10, **characterised in that** the proportion of the polyester is 20 to 95 % by weight.

12. Use of the mixture according to claims 1 to 11 as a radiation-curing paint or printing ink.

13. Method of coating a substrate comprising the following stages:

(i) application of the mixture according to claims 1 to 11 to the substrate and
(ii) curing of the film by exposure to radiation.

14. Method according to claim 13, **characterised in that** a further film of radiation-curing paints or printing inks is applied to the coated substrate.

15. Method according to claim 14, **characterised in that** the first film is applied in a thickness of from 1 to 25 $\mu$m and further films are applied in thicknesses of from 1 to 500 $\mu$m.

16. Method according to claim 14 or 15, **characterised in that** the substrate used is a metal or polymer one or one coated by the method according to claim 13 or 14, films which adhere to metal and polymer substrates being obtained.

17. Method according to claims 13 to 16, **characterised in that** the reduction caused by shrinkage is less than 10% and preferably less than 7%.

**Patentansprüche**

1. Gemisch zum Herstellen strahlungsgehärteter Filme, umfassend

(a) einen hochverzweigten Polyester, der terminale Acrylatgruppen aufweist, erhältlich durch Polymerisieren m-funktioneller Sorbinsäureester als eine Komponente A und n-funktioneller Acrylsäureester als eine Komponente B in einer Diels-Alder-Reaktion bei einer Temperatur von 50 bis 150°C, wobei

(i) m und n natürliche Zahlen von 2 bis 6 sind und der Unterschied zwischen m und n wenigstens 1 ist und
(ii) Komponenten A und B in einem Verhältnis zwischen den Molzahlen verwendet werden, das die folgende Gleichung (1) erfüllt:

$$n_e/n_v \geq f_v - 1 \quad (1)$$

wobei $n_e$ die Molzahl der Komponente niedrigerer Funktionalität ist, $n_v$ die Molzahl der Komponente höherer Funktionalität ist und $f_v$ die Funktionalität der Komponente höherer Funktionalität ist, und
(b) einen Photoinitiator.

2. Gemisch nach Anspruch 1, **dadurch gekennzeichnet, dass** der Photoinitiator ausgewählt ist aus der Gruppe, umfassend Benzophenone, Benzilketale, Dialkoxyacetophenone, Hydroxyalkylacetophenone, Aminoalkylphenone und Acylphosphinoxide.

3. Gemisch nach Anspruch 1 oder 2, **dadurch gekennzeichnet, dass** es auch enthält:

(c) verschiedene Mono-, Di-, Tri-, Tetra- oder Polyacrylate des hochverzweigten Polyesters und, wo erforderlich,
(d) normale Additive und/oder Pigmente.

4. Gemisch nach Anspruch 1 oder 2, **dadurch gekennzeichnet, dass** es die hochverzweigten Polyester in einer Menge von 90 bis 99,9 Gewichts-% und den Photoinitiator in einer Menge von 0,1 bis 10 Gewichts-% umfasst.

5. Gemisch nach Anspruch 3, **dadurch gekennzeichnet, dass** es 10 bis 90 Gewichts-% hochverzweigter Polyester, 0,1 bis 10 Gewichts-% des Photoinitiators, 20 bis 80 Gewichts-% Mono-, Di-, Tri-, Tetra- oder Polyacrylat und, wo erforderlich, zum Rest normale Additive und/oder Pigmente umfasst.

**6.** Gemisch nach den Ansprüchen 1 bis 5, **dadurch gekennzeichnet, dass** der hochverzweigte Polyester aus den folgenden Komponenten hergestellt wurde

a) Trisorbat(v) + Diacrylat(e); $n_e/n_v \geq 2$; ($S_3A_2$-Acrylat-Polyester)
b) Tetrasorbat(v) + Diacrylat(e); $n_e/n_v \geq 3$; ($S_4A_2$-Acrylat-Polyester)
c) Tetrasorbat(v) + Triacrylat(e); $n_e/n_v \geq 3$; ($S_4A_3$-Acrylat-Polyester)
d) Hexasorbat(v) + Diacrylat(e); $n_e/n_v \geq 5$; ($S_6A_2$-Acrylat-Polyester)
e) Hexasorbat(v) + Triacrylat(e); $n_e/n_v \geq 5$; ($S_6A_3$-Acrylat-Polyester)
f) Hexasorbat(v) + Tetraacrylat(e); $n_e/n_v \geq 5$; ($S_6A_4$-Acrylat-Polyester)

wobei $n_e/n_v$ das molare Verhältnis der Komponenten (e) und (v) ist.

**7.** Gemisch nach den Ansprüchen 1 bis 6, **dadurch gekennzeichnet, dass** das Molekulargewicht des hochverzweigten Polyesters 1.000 bis 50.000 g/mol ist.

**8.** Gemisch nach den Ansprüchen 1 bis 7, **dadurch gekennzeichnet, dass** der hochverzweigte Polyester noch 5 bis 30% nicht umgesetztes polyfunktionelles Acrylat enthält.

**9.** Gemisch nach den Ansprüchen 1 bis 8, **dadurch gekennzeichnet, dass** seine Viskosität 0,1 bis 10 Pas ist.

**10.** Gemisch nach Anspruch 6, **dadurch gekennzeichnet, dass** der hochverzweigte Polyester ein $S_4A_3$-, $S_6A_2$-, $S_6A_3$-, $S_6A_4$-Polyester ist.

**11.** Gemisch nach Anspruch 10, **dadurch gekennzeichnet, dass** der Anteil des Polyesters 20 bis 95 Gewichts-% ist.

**12.** Verwendung des Gemisches nach den Ansprüchen 1 bis 11 als einen strahlungshärtenden Anstrich oder eine strahlungshärtende Druckfarbe.

**13.** Verfahren des Beschichtens eines Substrats, umfassend die folgenden Stufen:

(i) Auftragen des Gemisches nach den Ansprüchen 1 bis 11 auf das Substrat und
(ii) Härten des Films durch Bestrahlen.

**14.** Verfahren nach Anspruch 13, **dadurch gekennzeichnet, dass** ein weiterer Film strahlungshärtender Anstriche oder Druckfarben auf das beschichtete Substrat aufgetragen wird.

**15.** Verfahren nach Anspruch 14, **dadurch gekennzeichnet , dass** der erste Film in einer Dicke von 1 bis 25 $\mu$m aufgetragen wird und weitere Filme in Dicken von 1 bis 500 $\mu$m aufgetragen werden.

**16.** Verfahren nach Anspruch 14 oder 15, **dadurch gekennzeichnet, dass** das verwendete Substrat ein Metallsubstrat oder Polymersubstrat ist oder ein durch das Verfahren nach Anspruch 13 oder 14 beschichtetes Substrat ist, wobei Filme, welche an Metall- oder Polymersubstraten haften, erhalten werden.

**17.** Verfahren nach den Ansprüchen 13 bis 16, **dadurch gekennzeichnet, dass** die durch Schrumpfung verursachte Reduktion weniger als 10% und vorzugsweise weniger als 7% ist.

**Revendications**

**1.** Mélange servant à produire des films durcis par rayonnement, comprenant

(a) un polyester fortement ramifié possédant des groupements acrylates terminaux, qui peut être obtenu en polymérisant des esters d'acide sorbique m-fonctionnels comme composant A et des esters d'acide acrylique n-fonctionnels comme composant B dans une réaction de Diels-Alder à une température de 50 à 150 °C, dans lequel

(i) m et n sont des entiers naturels compris entre 2 et 6 et la différence entre m et n est au moins 1 et
(ii) les composants A et B sont utilisés avec un rapport entre nombres de moles qui satisfait à l'équation suivante (1) :

$$n_e/n_v > f_v - 1 \qquad (1)$$

dans lequel $n_e$ est le nombre de moles du composant de fonctionnalité la plus faible, $n_v$ est le nombre de moles du composant de fonctionnalité la plus élevée et $f_v$ est la fonctionnalité du composant de fonctionnalité la plus élevée, et
(b) un photoinitiateur.

2. Mélange selon la revendication 1, **caractérisée en ce que** le photoinitiateur est choisi dans le groupe comprenant les benzophénones, les cétals de benzyle, les dialkoxyacétophénones, les acétophenones d'hydroalkyle, les phénones d'aminoalkyle et les oxydes d'acylphosphine.

3. Mélange selon la revendication 1 ou 2, **caractérisé en ce qu'**il contient également :

(c) divers mono-, di-, tri-, tétra- ou polyacrylates du polyester fortement ramifié et, lorsque cela est nécessaire,
(d) des additifs et/ou pigments normaux.

4. Mélange selon la revendication 1 ou 2, **caractérisé en ce qu'**il comprend les polyesters fortement ramifiés dans une quantité de 90 et 99,9% en poids et le photoinitiateur dans une quantité de 0,1 et 10% en poids.

5. Mélange selon la revendication 3, **caractérisé en ce qu'**il comprend de 10 à 90 % en poids de polyesters fortement ramifiés, de 0,1 à 10 % en poids du photoinitiateur, de 20 à 80 % en poids du mono-, di-, tri-, tétra- ou polyacrylate et, lorsque cela est nécessaire, des additifs et/ou pigments normaux pour compléter le mélange.

6. Mélange selon les revendications de 1 à 5, **caractérisé en ce que** le polyester fortement ramifié a été produit à partir des composants suivants

(a) trisorbate(v) + diacrylate(e); $n_e/n_v > 2$; (polyester d'acrylate $S_3A_2$)
(b) tetrasorbate(v) + diacrylate(e); $n_e/n_v > 3$ ; (polyester d'acrylate $S_4A_2$)
(c) tetrasorbate(v) + triacrylate(e); $n_e/n_v > 3$ ; (polyester d'acrylate $S_4A_3$)
(d) hexasorbate(v) + diacrylate (e) ; $n_e/n_v > 5$; (polyester d'acrylate $S_6A_2$)
(e) hexasorbate(v) + triacrylate(e); $n_e/n_v > 5$; (polyester d'acrylate $S_6A_3$)
(f) hexasorbate(v) + tetraacrylate(e); $n_e/n_v > 5$; (polyester d'acrylate $S_6A_4$)
dans lequel $n_e/n_v$ est le rapport molaire des composants (e) et (v).

7. Mélange selon les revendications 1 à 6, **caractérisée en ce que** le poids moléculaire du polyester fortement ramifié est de 1 000 à 50 000 g/mol.

8. Mélange selon les revendications 1 à 7, **caractérisé en ce que** le polyester fortement ramifié contient encore de 5 à 30% d'acrylate polyfonctionnel qui n'a pas réagi.

9. Mélange selon les revendications 1 à 8, **caractérisé en ce que** sa viscosité est 0,1 à 10 Pas.

10. Mélange selon la revendication 6, **caractérisée en ce que** le polyester fortement ramifié est un polyester $S_4A_3$, $S_6A_2$, $S_6A_3$, $S_6A_4$.

11. Mélange selon la revendication 10, **caractérisé en ce que** la proportion du polyester est de 20 à 95 % en poids.

12. Utilisation du mélange selon les revendications 1 à 11 en tant que peinture ou encre d'imprimerie durcissable par rayonnement.

13. Procédé de revêtement d'un substrat comprenant les étapes suivantes :

(i) l'application du mélange selon les revendications de 1 à 11 au substrat et

(ii) le durcissement du film par exposition à un rayonnement.

**14.** Procédé selon la revendication 13, **caractérisé en ce qu'**un film supplémentaire de peintures et d'encres d'imprimerie durcissables par rayonnement est appliqué au substrat enduit.

**15.** Procédé selon la revendication 14, **caractérisé en ce que** le premier film est appliqué avec une épaisseur de 1 à 25 $\mu$m et que les films supplémentaires sont appliqués avec des épaisseurs de 1 à 500 $\mu$m.

**16.** Procédé selon la revendication 14 ou 15, **caractérisé en ce que** le substrat utilisé est un métal ou un polymère enduit par le procédé selon la revendication 13 ou 14, des films qui adhérent au métal et des substrats de polymère étant obtenus.

**17.** Procédé selon les revendications 13 à 16, **caractérisé en ce que** la réduction causée par le retrait est inférieure à 10% et de préférence inférieure à 7%.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 20020003299 A
- WO 9317060 A
- US 5834118 A
- NL 1008189
- WO 9607688 A
- WO 0059982 A

- WO 0077070 A
- EP 02003299 A
- US 5002976 A

**Non-patent literature cited in the description**

- **TOMALIA et al.** *Angew. Chem. Int. Ed.,* 1990, vol. 29, 138
- **FRECHET.** *Science,* 1994, vol. 263, 1719
- *J. Macromol. Sc., Pure Appl. Chem.,* 1994, vol. A31 (11), 1627

- *Macromolecules,* 2000, vol. 33, 1720-26
- **M. JOHANSSON et al.** *Journal of Applied Polymer Science,* 2000, vol. 75, 612-618
- **M. JOHANNSON ; A. HULT.** *Journal of Coatings Technology,* 1995, vol. 67 (849), 35-39